# EUROPÄISCHE PATENTANMELDUNG

(11) **EP 0 962 758 A2**
(43) Veröffentlichungstag der Anmeldung: **08.12.1999**
(21) Anmeldenummer: 99107841.1
(22) Anmeldetag: 20.04.1999
(51) Int. Cl.: G01M 17/04

(54) **Vorrichtung zum Ermitteln der Eigenschatfen einer Radaufhängung eines Fahrzeugs**

(30) Priorität: 08.05.1998 DE 19820744
(71) Anmelder: Beissbarth GmbH, 80993 München (DE)
(72) Erfinder: Schmidt, Horst, 81249 München (DE); Rehpenn, Holger, 85462 Eitting (DE)
(74) Vertreter: Kirschner, Klaus Dieter, Dipl.-Phys.

(57) **Zusammenfassung**

Die Vorrichtung zum Ermitteln mindestens einer Eigenschaft einer Radaufhängung eines Fahrzeug umfaßt ein Radauflager, auf den in Form einer befahrbaren Platte ein Rad des Fahrzeugs bei der Ermittlung angeordnet ist, eine Detektionseinrichtung zum Detektieren von Werten, die der zu ermittelnden Eigenschaft der Radaufhängung zugeordnet sind, eine Antriebseinrichtung, die mit der Platte gekoppelt ist, sie in Schwingung versetzt, und einen Kurbelbetrieb hat, der über eine Pleuelstange mit der Platte gekoppelt ist, um das Radauflager in Schwingung zu versetzen, eine Steuereinrichtung, die die Antriebseinrichtung steuert und mit der Detektionseinrichtung gekoppelt ist, um aus den von der Detektionseinrichtung detektierten Werten die Eigenschaft der Radaufhängung zu bestimmen. Das Radauflager hat mindesten zwei Platten-Auflager in Form von Querträgern, auf denen die Platte gelagert ist, die mit Abstand zueinander angeordnet sind und die sich rechtwinklig zur Längsachse der Kurbelwelle erstrecken. Der Kurbeltrieb hat eine Kurbelwelle und zwei Pleuelstangen, die jeweils mit einem Ende an einem der Platten-Auflager und mit dem anderen Ende an der Kurbelwelle gelagert sind.

## Beschreibung

Die Erfindung betrifft eine Vorrichtung zum Ermitteln oder Messen mindestens einer Eigenschaft, insbesondere der Stoßdämpfer-Eigenschaften, einer Radaufhängung eines Fahrzeugs, wobei die Vorrichtung ein Radauflager, auf dem mindestens ein Rad des Fahrzeugs bei der Messung angeordnet ist, eine Detektionseinrichtung zum Detektieren von Werten, die der zu ermittelnden Eigenschaft der Radaufhängung zugeordnet ist, eine Antriebseinrichtung, die mit dem Radauflager gekoppelt ist und die das Radauflager in Schwingung versetzt, und eine Steuereinrichtung aufweist, die die Antriebseinrichtung steuert und mit der Detektionseinrichtung gekoppelt ist, um aus den von der Detektionseinrichtung detektierten Werten die Eigenschaft der Radaufhängung zu bestimmen.

Eine solche Vorrichtung wird beispielsweise in der EP 0 647 843 A2 beschrieben. Bei der bekannten Meßvorrichtung wird der Dämpfungskoeffizient des Stoßdämpfersystems eines Fahrzeugs als eine Eigenschaft der Radaufhängung des Fahrzeugs bestimmt, wobei das Fahrzeug mit einem Reifen auf einer Plattform steht, die vertikal mit einer geeigneten Amplitude und mit einer variablen Frequenz bewegbar ist. Die Plattform wird mittels einer Antriebseinrichtung in Schwingung versetzt beziehungsweise erregt, wobei die Antriebseinrichtung einen Nocken hat, der die Rotationsbewegung eines Elektromotors in eine vertikale Erregerbewegung der Plattform umsetzt. Der Nocken berührt dabei die Plattform direkt, wodurch es zu einer Reibungsabnutzung sowohl des Nocken als auch dessen Berührungsstelle an der Plattform kommt, was wiederum mit der Zeit zu einer ungewünschten Änderung der Erregerschwingung führt und damit zu Fehlern in der Ermittlung der Stoßdämpfereigenschaften.

Die EP 0 142 135 B1 beschreibt eine Vorrichtung zum Qualifizieren von Stoßdämpfern an mit elastischen Reifen versehenen, gefederten Fahrwerken von Kraftfahrzeugen. Hier steht ein Rad des Kraftfahrzeugs bei der Stoßdämpfermessung auf einem Teller als Radauflager, der wiederum auf konstruktiv aufwendigen Keillagern mit horizontal verschiebbaren Keilen gelagert ist. Die Keile werden in der horizontalen hin und her bewegt um eine entsprechende Vertikalbewegung des Tellers und damit des Rades zu erzeugen.

In der WO 96/07882 wird eine Vorrichtung und ein Verfahren zum Prüfen von Stoßdämpfern von Fahrzeugen beschrieben. Bei dem bekannten Verfahren, wird ein Rad des Fahrzeugs, das sich auf einer Aufnahme als Radauflager befindet, angehoben und die Federkonstante der Radaufhängung bestimmt. Danach wird die Erregerfrequenz variiert, um die Resonanzfrequenz der Radaufhängung zu bestimmen. Nach dem Einstellen der Resonanzamplitude der ermittelten Resonanzfrequenz wird schließlich die Kennlinie des Stoßdämpfers nach einem allgemein gültigen physikalischen und mathematischen Modell ermittelt. Zum Versetzen des angehobenen Rades in Schwingungen ist ein Hauptmotor vorgesehen, der einen Exzenter antreibt. Der Exzenter ist wiederum über ein federndes Mittel, beispielsweise eine Spiralfeder, mit der Aufnahme für das Rad verbunden. Da sich die Eigenschaften der Spiralfeder durch Materialermüdung mit der Zeit ändern, ist es schwierig das Rad mit einem gleichbleibenden Erregerhub in Schwingung zu versetzen, wodurch die Messung der Radaufhängungseigenschaften zunehmend fehlerhafter wird.

Aufgabe der vorliegenden Erfindung ist es, eine Vorrichtung zur Bestimmung der Eigenschaften der Radaufhängung eines Fahrzeugs anzugeben, bei der das Rad mit Radaufhängung eines Fahrzeugs mit einer gleichbleibend definierten Bewegung in Schwingung versetzt wird.

Diese Aufgabe wird durch die Vorrichtung gemäß Anspruch 1 gelöst. Die erfindungsgemäße Vorrichtung, hat den Vorteil, daß aufgrund des verwendeten Kurbeltriebs mit Pleuelstange eine sehr genaue Bewegung des Radauflagers und damit Erregerschwingung des zu testenden Rades mit Radaufhängung erzeugt wird, da der Kurbeltrieb mit Pleuelstange eine sehr genaue Hubbewegung und damit Amplitude mit Langzeitstabilität hat. Außerdem ermöglicht der Kurbeltrieb mit Pleuelstange die Erzeugung eines sehr genauen Schwingungsverlaufs praktisch ohne Oberwelligkeit, das heißt praktisch eine einfrequente Erregerschwingung mit konstanter Amplitude, wodurch Verfälschungen der Meßergebnisse aufgrund einer oberwelligen Erregung vorteilhafterweise vermieden werden. Damit ermöglicht die erfindungsgemäße Vorrichtung eine überraschend genaue und dementsprechend aussagekräftige Messung von Fahrwerkseigenschaften, insbesondere der Funktion der Stoßdämpfer. Dadurch, daß zwei Platte-Auflager, auf denen die Platte gelagert ist und die mit Abstand zueinander angeordnet sind, vorgesehen sind und der Kurbeltrieb eine Kurbelwelle und zwei Pleuelstangen, die jeweils mit einem Ende an einem der Platte-Auflager gelagert sind und mit dem anderen Ende an der Kurbelwelle gelagert sind, aufweist , kann eine gleichmäßige Schwingungserregung der Platte und damit auch des Rades mit Reifen und Radaufhängung erzeugt werden. Die Querträger, die sich rechtwinklig zur Längsachse der Kurbelwelle erstrecken, erlauben eine stabile Konstruktion der Platte-Auflager mit vernachlässigbar geringer Durchbiegang unter Last.

Unter Eigenschaften der Radaufhängung sind insbesondere physikalische oder technische Größen der Radaufhängung wie beispielsweise der Federn, der Stoßdämpfer und der Federn oder ihr Verhalten zu verstehen.

Bevorzugt ist die Platte des Radauflagers rechteckig, wobei jeweils ein Vertikallager im Bereich jeder der Ecken der Platte angeordnet ist, um eine optimale vertikale Führung des Radauflagers unter Last sicherzustellen.

Die Kurbelwelle des Kurbeltriebs der erfindungsgemäßen Vorrichtung ist bevorzugt zwischen den Pleuellagern der Pleuelstangen an der Kurbelwelle auf einer Grundplatte gelagert, um einen langzeitstabilen Gleichlauf der Kurbelwelle sicherzustellen.

Die mindestens eine Pleuelstange wird vorzugsweise an einem Endbereich der Kurbelwelle des Kurbeltriebs gelagert, um die Gleichlaufeigenschaften des Kurbeltriebs weiter zu verbessern.

Vorzugsweise ist das Radauflager über mehrere Vertikallager oder Führungen auf einer Grundplatte gelagert. Die Führungen lassen alleine eine vertikal gerichtete Bewegung des Radauflagers zu, um zu verhindern, daß horizontal gerichtete Komponenten der Erregerschwingung oder Bewegung auf das Radauflager einwirken, die ansonsten die Meßergebnisse verfälschen würden.

Die Detektionseinrichtung hat vorzugsweise einen oder mehrere Aufnehmer, die an dem Radauflager angebracht und mit der Steuereinrichtung verbunden sind, um fehlerhafte Meßergebnisse aufgrund einer unsymmetrischen und ungleichen Lastverteilung des Rades auf dem Radauflager oder der Platte zu vermeiden.

Der Kurbeltrieb der erfindungsgemäßen Vorrichtung hat bevorzugt eine Kurbelwelle, die sich im Bereich unterhalb der Platte beziehungsweise des Radauflagers erstreckt und mit Stehlagern auf einer Grundplatte gelagert ist. Durch diese Anordnung der Kurbelwelle wird eine platzsparende und kompakte Konstruktion der erfindungsgemäßen Vorrichtung ermöglicht.

Die Antriebseinrichtung hat bevorzugt einen Elektromotor und eine Kupplung, die die Kurbelwelle mit dem Elektromotor koppelt, um ein gleichmäßiges Hochfahren des Antriebs zu ermöglichen.

Das Radauflager der erfindungsgemäßen Vorrichtung hat bevorzugt mindestens ein Platte-Auflager, an dem die mindestens eine Pleuelstangen des Kurbeltriebs gelagert ist, wobei zwischen der Platte und jedem der Platte-Auflager jeweils ein Aufnehmer angeordnet ist, auf dem sich die Platte befindet, um eine genaue Ermittlung der Fahrwerkseigenschaften, insbesondere der Stoßdämpferkoeffizienten, zu ermöglichen.

Vorzugsweise ist eine Anzeigeeinrichtung vorgesehen, die mit der Steuereinrichtung verbunden ist, um Informationen von der Steuereinrichtung anzuzeigen.

An einer Motorwelle des Elektromotors der Antriebseinrichtung ist vorzugsweise ein Detektor beziehungsweise Drehwinkelgeber oder Impulsgeber angeordnet,. um eine Regelung der Drehzahl des Elektromotors zu ermöglichen.

Vorzugsweise hat der Kurbeltrieb der Antriebseinrichtung eine Kurbelwelle, an der ein Detektor oder Impulsgeber zur Detektion des Drehwinkels und/oder der Drehzahl der Kurbelwelle angeordnet ist, um den Drehwinkel der Motorwelle und damit ihre Momentanlage zu ermitteln.

Weitere Vorteile, vorteilhafte Weiterbildungen und Anwendungsmöglichkeiten der vorliegenden Erfindung sind der nachfolgenden Beschreibung in Verbindung mit den beiliegenden Zeichnungen zu entnehmen. Es zeigen:
- Figur 1: eine Gesamtansicht einer Ausführungsform der erfindungsgemäßen Vorrichtung;
- Figur 2: eine Ansicht der Ausführungsform der Erfindung der Figur 1, in Richtung des Pfeiles II der Figur 1 gesehen; und
- Figur 3: eine Ansicht der Ausführungsform der Figur 1, in Richtung des Pfeiles III in Figur 1 gesehen.

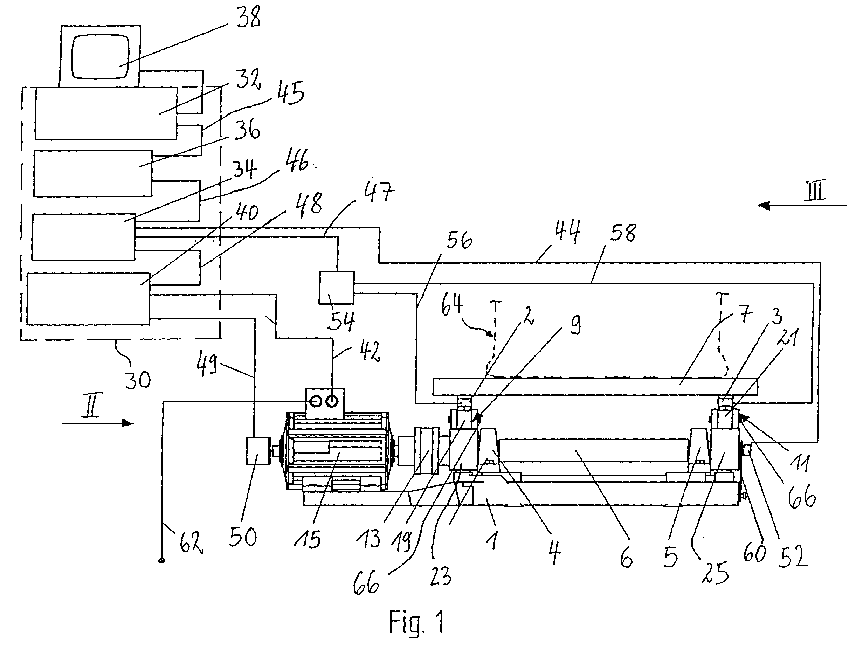

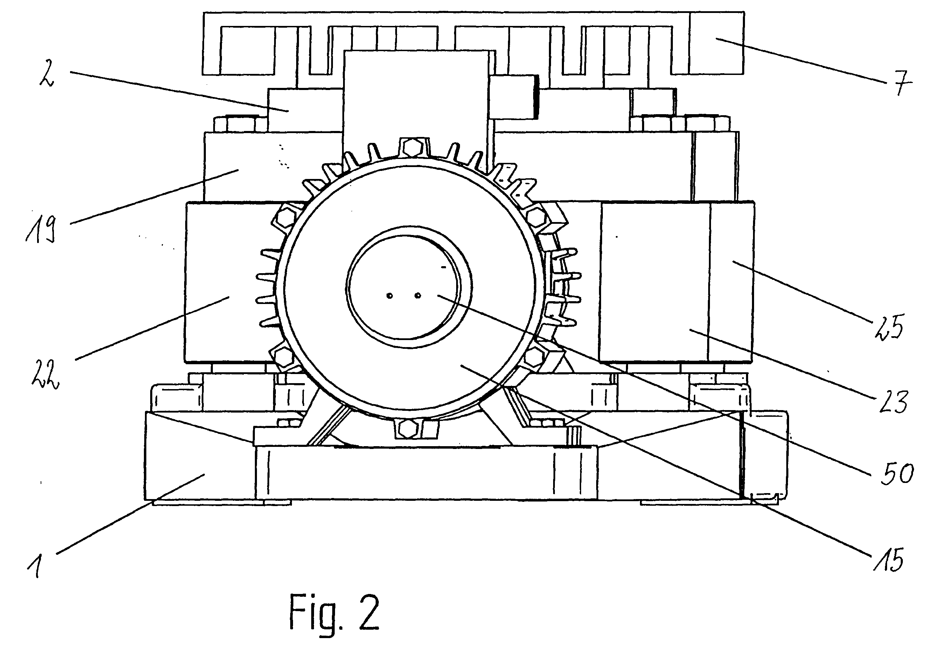

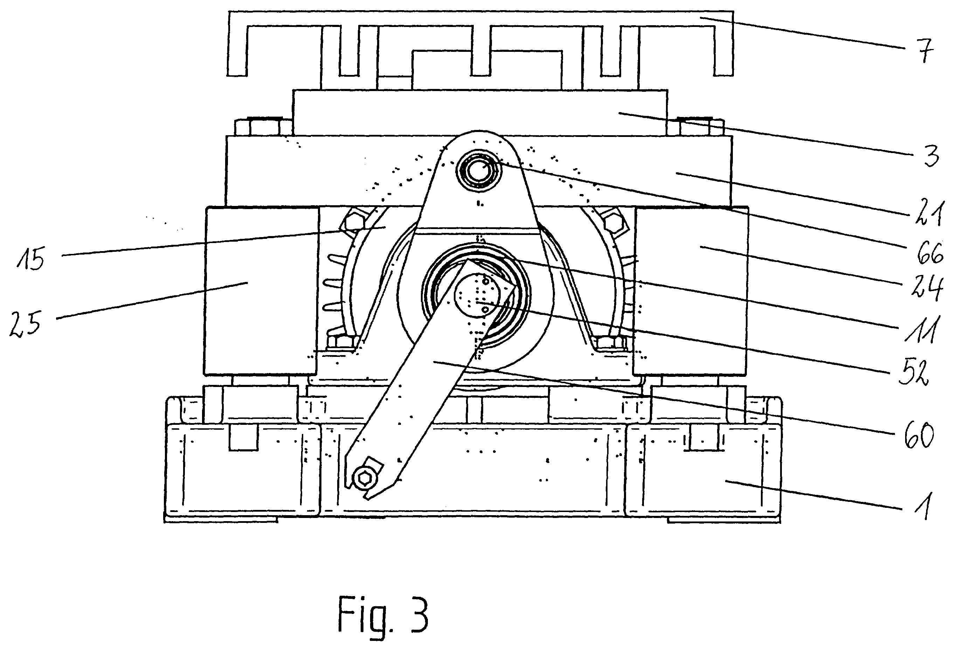

Die in den Figuren 1 bis 3 dargestellte Ausführungsform der erfindungsgemäßen Vorrichtung umfaßt ein Radauflager, auf dem ein Rad 64 des Fahrzeugs bei der Ermittlung der Eigenschaften der Radaufhängung des Fahrzeugs, angeordnet ist, eine Detektionseinrichtung zum Detektieren von Werten, die einer Eigenschaft der Radaufhängung, insbesondere einem Stoßdämpfer der Radaufhängung, zugeordnet ist, eine Antriebseinrichtung, die mit dem Radauflager gekoppelt ist und die das Radauflager in Schwingung versetzt und eine Steuereinrichtung 30, die die Antriebseinrichtung steuert und mit der die Detektionseinrichtung gekoppelt ist, um aus den von der Detektionseinrichtung detektierten Werten die Eigenschaft der Radaufhängung zu bestimmen.

Das Radauflager umfaßt eine befahrbare Platte 7, auf der ein Rad 64 des Fahrzeugs bei der Messung der Eigenschaften des zugehörigen Stoßdämpfers steht. Die Platte 7 ist eben und hat einen rechteckigen Umriß. Weiterhin hat das Radauflager zwei Platte-Auflager 19 und 21, die jeweils als vierkantige Querträger ausgelegt sind, welche zueinander beabstandet sind und sich parallel zueinander erstrecken. Jeder der Querträger beziehungsweise jedes der Platte-Auflager 19, 21 ist an den Enden über reibungsarme Vertikallager oder Führungen, beispielsweise Kugelbuchsen, 22, 23 beziehungsweise 24, 25 mit einer Grundplatte 1 gekoppelt beziehungsweise auf dieser gelagert.

Die Antriebseinrichtung der erfindungsgemäßen Vorrichtung umfaßt im wesentlichen einen mit Getriebe versehenen oder getriebelosen Elektromotor 15, einen Kurbeltrieb mit einer langgestreckten Kurbelwelle 6, zwei Pleuelstangen 9 und 11, die jeweils an der Kurbelwelle 6 gelagert sind, zwei Wellenlager 4 und 5 für die Kurbelwelle 6, die als Kugellager ausgebildet und auf der Grundplatte 1 befestigt sind, und eine Kupplung 13 zwischen Elektromotor 15 und Kurbelwelle 6.

Die Kurbelwelle 6 der Antriebseinrichtung hat zwei Kurbeln (nicht gezeigt) oder kurbelähnliche Einheiten mit Kurbelfunktion, wobei an jeder Kurbel eine der Pleuelstangen 9, 11 mit dem entsprechenden Kopf gelagert ist. Der andere Kopf der Pleuelstange 9 oder 11 ist an dem Platte-Auflager 19 beziehungsweise 21 gelagert. Die Köpfe der Pleuelstangen 9 und 11 sind gegabelt und über entsprechende Lagerbolzen 66 an dem jeweiligen Platte-Auflager 19 beziehungsweise 21 gelagert. Die Pleuelstangen 9, 11 bewegen sich jeweils innerhalb eines Gehäuses. Die Platte-Auflager 19, 21 beziehungsweise Querträger erstrecken sich rechtwinklig zur Längsachse der Kurbelwelle 6 und sind oberhalb der Kurbelwelle 6 angeordnet. Die Pleuelstangen 9 und 11 sind an den Querträgern mittig, bezüglich der Längserstreckung der Querträger gesehen, gelagert. Die Kurbelwelle 6 ist im Bereich zwischen den beiden Kurbeln der Kurbelwelle 6 in den Wellenlager 4, 5 gelagert, wobei die Wellenlager 4, 5 zu den Kurbelbereichen der Kurbelwelle 6 benachbart angeordnet sind.

Zwischen den Querträgern als Platte-Auflager 19 beziehungsweise 21 und der Platte 7 ist pro Querträger jeweils eine Aufnehmereinheit 2 beziehungsweise 3 angeordnet. Die Drehbewegung des Elektromotors 15 wird über die angekoppelte Kurbelwelle 6 und die beiden gleichphasig laufenden Pleuelstangen 9 und 11 in eine Vertikalbewegung beziehungsweise Auf- und Abbewegung der Querträger und damit auch in eine Vertikalbewegung der Platte 7 selbst umgesetzt, um das auf der Platte ruhende Rad 64 mit zugehöriger Radaufhängung, also Stoßdämpfer und Federung, in Schwingung zu versetzen beziehungsweise zu erregen.

Die Steuereinrichtung 30 ist prozessorgesteuert und umfaßt einen Personalcomputer 32, einen Fahrwerktester 34, einen Prüfstraßenrechner 36, einen Frequenzumrichter 40 und einen Monitor oder Bildschirm 38 als Anzeigeeinrichtung. Weiterhin ist ein Impulsgeber 50 als Detektor für den Drehwinkel beziehungsweise Drehgeschwindigkeit oder Bewegung einer Motorwelle des Elektromotors 15 und ein Impulsgeber 52 als Detektor für die Drehung beziehungsweise den Drehwinkel der Kurbelwelle 6 vorgesehen. Der Impulsgeber 52 ist mittels einer Halterung 60 in Meßposition an der Kurbelwelle 6 gehalten.

Der Personalcomputer 19 ist mit dem Prüfstraßenrechner 36 über ein Kabel 45 und entsprechende Schnittstellen nach dem RS-232 Standard verbunden. Über ein entsprechendes Monitorkabel ist der Monitor 38 mit dem Personalcomputer 32 verbunden. Der Prüfstraßenrechner 36 ist über ein Kabel 46 und entsprechende Schnittstellen, die nach dem i²C-Standard ausgelegt sind, mit dem Fahrwerktester 34 verbunden. Der Fahrwerktester 34 ist mit einem Kabel 44 mit dem Impulsgeber 52 an der Kurbelwelle 6, über ein Kabel 47 mit einer Aufnehmer-Zweigdose 54 und über ein Kabel 48 und entsprechende Schnittstellen, die nach den RS-232 Standard ausgelegt sind, mit dem Frequenzumrichter 40 verbunden. Die Aufnehmer-Zweigdose 54 ist über jeweils ein Aufnehmer-Anschlußkabel 56 beziehungsweise 58 mit den Aufnehmereinheiten 2 beziehungsweise 3 elektrisch verbunden.

Der Frequenzumrichter 40 ist über ein Motoranschlußkabel 42 mit einem Anschluß des Elektromotors 15 verbunden, um den Elektromotor 15 anzusteuern, und weiterhin über ein Kabel 49 mit dem Impulsgeber 50 an der Motorwelle des Elektromotors 15 verbunden, wodurch ein Regelkreis zur Regelung der Drehgeschwindigkeit des Elektromotors 15 eingerichtet ist. Der Elektromotor 15 ist über eine Erdungsleitung 62 mit Erde oder Masse verbunden.

Die Aufnehmereinheiten 2 und 3 sind beispielsweise als Meßdosen mit Dehnungsmeßstreifen beziehungsweise piezoelektrischen Sensoren zur Detektion der an den Aufnehmereinheiten auftretenden Kräfte ausgelegt. Die Aufnehmereinheiten 2 und 3 erzeugen elektrische Signale, die ein Maß für die an den Aufnehmereinheiten 2 und 3 auftretenden statischen und dynamischen Kräfte sind.

Zur Ermittlung beziehungsweise zur Messung von Fahrwerkseigenschaften eines Kraftfahrzeuges, beispielsweise der einzelnen Stoßdämpfer, wird zunächst die momentane Vertikallage der Platte 7 mittels der Signale vom Impulsgeber 52, der als Drehwinkelgeber ausgelegt ist, an der Kurbelwelle 6 bestimmt. Jeder Drehwinkel der Kurbelwelle 6 ist aufgrund des Kurbeltriebs mit den Pleuelstangen 9 und 11 genau einer Vertikallage der Platte 7 zugeordnet.

Ein bereiftes Rad 64 (gestrichelt in Figur 1 angedeutet) des Fahrzeugs wird dann auf die Platte 7 gefahren. Unter Steuerung der Steuereinrichtung 30 wird dann der Elektromotor 15 über den Frequenzumrichter 40 angesteuert, um die Kurbelwelle 6 in Drehung zu versetzen und damit über die Pleuelstangen 9 und 11 die Platte 7 mit aufsitzendem Rad 64 in Vertikalschwingungen zu versetzen. Die Vertikallager 22, 23, 24, 25 sorgen für eine reibungslose Führung des Radauflagers in Vertikalrichtung und dafür, daß die Bewegung der Platte 7 und des aufsitzenden Rades 64 exakt in Vertikalrichtung stattfindet.

Die Aufnehmereinheiten 2 und 3 geben entsprechend der dynamischen und statischen Krafteinwirkung elektrische Signale ab, die ein Maß für die auf die Aufnehmereinheiten 2 und 3 wirkenden Kräfte sind. Die elektrischen Signale, die Meßwerten zugeordnet sind, von den Aufnehmereinheiten 2, 3 und von dem Impulsgeber 52 an der Kurbelwelle 6 werden vom Fahrwerktester(rechner) 34 in digitale Daten oder Werte umgesetzt, die an den Prüfstraßenrechner 36 über das Kabel 46 weitergegeben werden.

Der Prüfstraßenrechner 36 unterzieht die digitalen Daten einer digitalen Filterung und einer weiteren Verarbeitung, um beispielsweise den Dämpfungskoeffizienten des jeweiligen Stoßdämpfers oder eine entsprechende Kennlinie zu ermitteln.

Über den Personalcomputer 32 und den Monitor 38 können dann die ermittelten Werte der Stoßdämpfereigenschaften angezeigt werden.

## Patentansprüche

1. Vorrichtung zum Ermitteln mindestens einer Eigenschaft einer Radaufhängung eines Fahrzeugs, wobei die Vorrichtung umfaßt:
a) ein Radauflager, auf den in Form einer befahrbaren Platte ein Rad des Fahrzeugs bei der Ermittlung angeordnet ist,
b) eine Detektionseinrichtung zum Detektieren von Werten, die der zu ermittelnden Eigenschaft der Radaufhängung zugeordnet sind,
c) eine Antriebseinrichtung, die mit der Platte gekoppelt ist, sie in Schwingung versetzt, und einen Kurbelbetrieb hat, der über eine Pleuelstange (9, 11) mit der Platte gekoppelt ist, um das Radauflager in Schwingung zu versetzen,
d) eine Steuereinrichtung, die die Antriebseinrichtung steuert und mit der Detektionseinrichtung gekoppelt ist, um aus den von der Detektionseinrichtung detektierten Werten die Eigenschaft der Radaufhängung zu bestimmen, dadurch gekennzeichnet,daß
e) das Radauflager mindesten zwei Platten-Auflager in Form von Querträgern (19, 21) hat, auf denen die Platte (7) gelagert ist, die mit Abstand zueinander angeordnet sind und die sich rechtwinklig zur Längsachse der Kurbelwelle (6) erstrecken, und daß
f) der Kurbeltrieb eine Kurbelwelle (6) und zwei Pleuelstangen (9, 11) hat, die jeweils mit einem Ende an einem der Platten-Auflager (19, 21) und mit dem anderen Ende an der Kurbelwelle (6) gelagert sind.

2. Vorrichtung nach Anspruch 1, dadurch gekennzeichnet, daß die Platte (7) rechteckig ist und über mehrere Vertikallager (22, 23, 24, 25), die im Bereich jeder Ecken der Platte (7) angeordnet sind, auf einer Grundplatte (1) gelagert ist.

3. Vorrichtung nach Anspruch 1, dadurch gekennzeichnet, daß die Detektionseinrichtung zwei Aufnehmereinheiten (2, 3) hat, zwischen der Platte (7) und jedem der Platten-Auflager (19, 21) angeordnet sind.

4. Vorrichtung nach Anspruch 1, dadurch gekennzeichnet, daß die Kurbelwelle (6) zwischen den Pleuellagern der Pleuelstangen (9, 11) an der Kurbelwelle (6) auf einer Grundplatte (1) gelagert ist.

5. Vorrichtung nach Anspruch 1 oder 4, dadurch gekennzeichnet, daß die Pleuelstangen (9, 11) an einem Endbereich an einer Kurbelwelle (6) des Kurbeltriebs gelagert ist.

6. Vorrichtung nach einem der vorstehenden Ansprüche, dadurch gekennzeichnet, daß die Kurbelwelle (6) sich im Bereich unterhalb der Platte (7) erstreckt und mit Wellenlagern (4, 5) auf einer Grundplatte (1) gelagert ist.
